# EUROPEAN PATENT SPECIFICATION

(11) **EP 3 421 023 B1**
(45) Date of publication and mention of the grant of the patent: **23.10.2019**
(21) Application number: 18397516.8
(22) Date of filing: 11.05.2018
(51) Int. Cl.: A61G 5/10, A61G 5/04, G05G 1/30

(54) **A CONTROL DEVICE FOR AN ASSISTIVE DEVICE, AND AN ELECTRIC WHEELCHAIR**
STEUERUNGSVORRICHTUNG FÜR EINE ASSISTENZVORRICHTUNG UND ELEKTRISCHER ROLLSTUHL
DISPOSITIF DE COMMANDE POUR DISPOSITIF D'ASSISTANCE ET CHAISE ROULANTE ÉLECTRIQUE

(30) Priority: 29.06.2017 FI 20175618
(43) Date of publication of application: 02.01.2019
(73) Proprietor: Camp Scandinavia Oy, 33900 Tampere (FI)
(72) Inventor: Hytönen, Veijo, 33610 Tampere (FI); Jokihaara, Teemu, 38250 Sastamala (FI)
(74) Representative: Berggren Oy, Tampere

(56) References cited:
- GB-A- 2 426 565
- US-A1- 2011 199 179
- US-A1- 2016 306 380
- US-B1- 6 906 700

## Description

### Field of the invention

The solution to be presented relates to a control device for an assistive device. The solution to be presented also relates to an electric wheelchair equipped with a control device.

### Background of the invention

An example of an assistive device for mobility is an electric wheelchair. It is an assistive device particularly for a person whose disease or disability prevents or constrains the operation of the musculoskeletal system. Said functional constraint of the musculoskeletal system may even totally prevent moving in other ways, or makes it very difficult.

An electric wheelchair is equipped with a battery-powered electric motor, and it is accelerated, braked, or steered in a desired direction by applying, for example, a control stick connected to an electronic control unit controlling the electric wheelchair. The control unit is connected to the electric motors and batteries. It may also be possible to set a maximum speed by the control stick.

The disease or disability of a person may also constrain the control of assistive devices, such as an electric wheelchair. An electric wheelchair may also be equipped with control by suction, by blowing, by the jaw, or by the head. Foot-controlled electric wheelchairs are known as well. The devices used for controlling assistive devices have to be suitable for the assistive device as well as to take into account the disease or disability of the person using the assistive device. GB 2 426 565 A discloses a foot operated control device suitable for wheeled vehicles.

### Brief summary of the invention

A control device according to the solution presented is disclosed in claim 1. A wheelchair equipped with a control device according to the solution presented is disclosed in claim 13.

The control device according to the solution presented is suitable for use in assistive devices for medical rehabilitation, for controlling them. In particular, this relates to electric assistive devices. In particular, assistive devices for mobility, including e.g. wheelchairs, bicycles and electric scooters, are also feasible. A particular use for the control device is an electric wheelchair, also called an electric-powered wheelchair.

The control device according to the solution presented, for controlling an assistive device, comprises a bottom element and a cover element which can be tilted and rotated with respect to the bottom part; a movement element made of an elastic and flexible material, connected between the cover element and the bottom element, and configured to rotate when the cover element is rotated in two opposite lateral directions, as well as to bend or buckle when the cover element is tilted forward and rearward; a first arm and a second arm which have an elastic structure and extend to a distance from the movement element, are oriented in opposite directions with respect to each other, and are configured to follow the above mentioned movements of the movement element; a first guide in which the first arm is fitted and which allows its movement in the above mentioned lateral directions and prevents its movements so that the first arm has to bend when the movement element is tilted forward and rearward; a second guide in which the second arm is fitted and which allows its tilting forward and rearward, and prevents its movements so that the second arm has to bend when the movement element is rotated in the above mentioned two opposite lateral directions; and electronic members for detecting and indicating a change in the position or a deformation of the first and second arms, the electronic members being configured to generate at least one signal which is proportional to the tilting of the cover element forward and rearward, and at least one signal which is proportional to the rotation of the cover element in the two opposite lateral directions.

The electric wheelchair according to the solution presented comprises a control device of the above described type, configured to steer the electric wheelchair forward and rearward, and to turn the electric wheelchair to the left and to the right.

The control device of the solution presented makes it possible to control the electric wheelchair by foot.

The solution presented provides a compact and low structure of the control device. Said structure is easy to place in *e.g.* a wheelchair so that the user does not need to lift the foot higher than normal and it is still possible to maintain a sufficient ground clearance or distance between the control device and the ground. Alternatively, it is possible to maintain a sufficient distance between the ground and a footrest, or the like, in which the control device is installed. If necessary, said footrest connected to the wheelchair can now be set sufficiently low. Consequently, it is easy for even tall users to apply the control device, and the foot is in a natural position.

The solution presented provides a simple and reliable control device. The control device may be integrated in electric wheelchairs of prior art, and connected to their electronic control units. The control unit is connected to the electric motors and batteries of the electric wheelchair. The control device may replace control sticks connected to the control unit, or it may be connected in parallel with a control stick or another control device, whereby it provides an alternative or supplementary means of control.

### Description of the drawings

Figure 1 shows a control device according to an example of the solution presented, the cover element being removed for the sake of illustration.
Figure 2 shows the control device according to Fig. 1, and parts thereof, in an exploded view.

### Detailed description of the invention

The solution presented will be described in greater detail in the following description, with reference to the accompanying drawings.

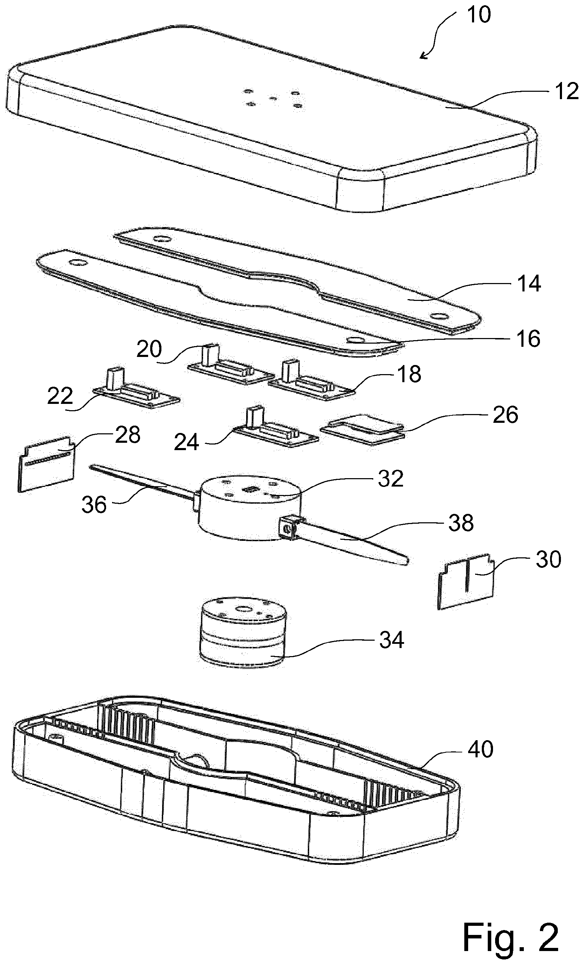

As shown in the example presented and in Fig. 2, the control device 10 may comprise a cover element 12, a bottom element 40, a movement element 34, a first arm 36, a second arm 38, a first guide 28, and a second guide 30.

The bottom part 40 is connected to the movement element 34, for example below, in the lower part or at the first end, for example the lower end, of the movement element 34. The bottom part 40 is preferably fixed to the movement element 34 either directly or indirectly so that they move together. The cover element 12 is coupled to the movement element 34, for example on top, at the upper part or the second end, for example the upper end, of the movement element 34. The cover part 12 is preferably fixed to the movement element 34 either directly or indirectly so that they move together. According to an example and Fig. 2, the cover element 12 is coupled to the movement element 34 indirectly via a fastening element 32.

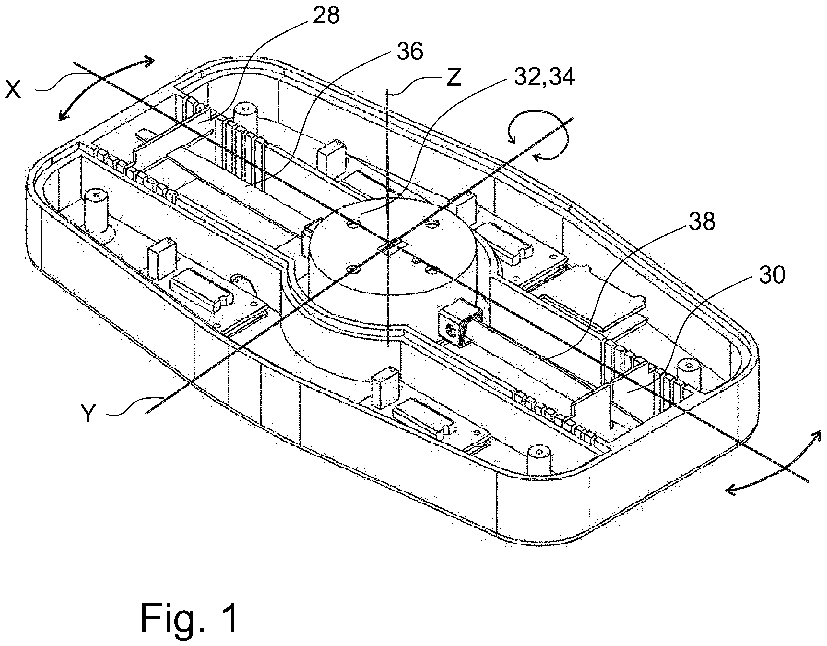

The movement element 34 is at least partly made of a material that is elastic and flexible. To put it more precisely, the material of the movement element 34 allows the top, the second end or the upper end of the movement element 34 to rotate with respect to the lower part, the first end or the lower end of the movement element 34 so that they rotate about an imaginary, substantially vertical rotation axis Z (see Fig. 1) with respect to each other when the control device 10 is placed in a use position as shown in Fig. 1, where it is substantially horizontal. The above described twisting is allowed in two opposite directions, that is, opposite lateral directions. As shown in Fig. 1, the imaginary rotation axes X and Y define a horizontal plane. The movement element 34 and its material are also configured to allow the bending or buckling of the movement element 34 at least forward and rearward, in two opposite directions, for example about a substantially horizontal rotation axis Y (see Fig. 1). The material of the movement element 34 is compressed and/or stretched when the movement element is bent or buckled.

Preferably, the movement element 34 is made of a material that resumes its original shape when the twisting, bending or buckling force is removed and is no longer effective on the movement element 34, for example via the cover element 12.

In an example, the movement element 34 is made at least partly of rubber. The movement element 34 may be provided with other parts whose material may deviate from the material of the movement element 34 and by which it can be fastened to the cover element 12 or the bottom element 40. Such a part is, for example, a fastening element 32. In an example, the movement element 34 is made of a vibration absorber whose material is rubber. In an example, the shape of the movement element 34 is a cylinder, at whose ends said cover element 12 and bottom element 40 are provided. In an example and Fig. 2, the fastening element 32 is placed around the top, the second end or the upper end of the movement element 34, and between the movement element 34 and the cover element 12.

The movement element 34 is configured to be twisted and bent via the cover element 12 so that the cover element 12 is turned in both lateral directions around said rotation axis Z, or tilted forward or rearward.

If the control device 10 is configured to be controlled by foot, the foot is preferably fitted on the cover part 12 so that the cover part 12 is tilted forward by the ball side of the foot and rearward by the heel side of the foot. The flexibility and elasticity of the material for the movement element 34 are selected to give a response, for example a force resisting the movement, that facilitates the use of the control device 10.

The cover element 12 may be provided with holders or members for receiving or fastening the foot, and for moving the cover element 12. The cover element 12 may be provided with fastening members. The bottom element 40 may be fastened to e.g. an electric wheelchair either directly or via a holder or a member. The bottom element 40 may be provided with fastening members.

The cover element 12 or the bottom element 40 may comprise other members, for example one or more covers 14, 16, by which e.g. the control electronics or other parts of the control device 10 may be covered or shielded.

The first arm 36 and the second arm 38 are made at least partly of a material that allows the bending or buckling of the arm 36, 38. Preferably, the arm 36, 38 is an elastic structure that resumes its original shape in a spring-like manner when a bending force effective on the arm 36, 38 is removed.

In an example, the arms 36, 38 are made of steel, and in an example, they are strip-like, lamellar or made of a sheet. Thus, the arms 36, 38 are configured to bend in two opposite directions only, but not in the lateral directions with respect to these.

The arms 36, 38 may be elongated, and/or they extend to a distance from the movement element 34. The arm 36, 38 is configured to follow the movement of the movement element 34, particularly the movement caused by the motion of the cover element 12. The proximal end or first end of the arm 36, 38, at the movement element 34, is configured to move with the top, the second end, or the upper end of the movement element 34. Said proximal end or first end of the arm 36, 38 is connected to the movement element 34 either directly or by a member, such as a fastening element 32. The arms 36, 38 are connected to *e.g.* the cylindrical side surface of the movement element 34, or close ot it. In an example and Fig. 2, the arms 36, 38 are fastened to that part of the fastening element 32 which is placed around the top, the second end or the upper end of the movement element 34. The outermost end, distal end or the second end of the arm 36, 38, which is spaced from the movement element 34, is configured to follow the movement of the proximal or first end of the arm 36, 38, but more largely.

The arms 36, 38 are coupled to the movement element 34 so that they point and extend in opposite directions with respect to each other, preferably in a horizontal direction or in parallel with the rotation axis X in the use position shown in Fig. 1. Preferably, the first arm 36 is fitted on *e.g.* the ball side of the foot, and the second arm 38 on the heel side, or *vice versa,* when the control device 10 is configured to be controlled by foot. In an example and Fig. 1, the arms 36, 38 are further connected on opposite sides of the movement element 34, e.g. so that they are lined up in parallel with the rotation axis X.

In an example and Fig. 2, when the arms 36, 38 are strip-like, lamellar or made of a sheet, one of the arms, *e.g.* the arm 36, is configured so that the planes defined by its lateral surfaces are substantially horizontal, as shown in the example of Fig. 1. Thus, the arm 36 bends in two opposite directions up and down, for example with respect to the rotation axis Y. The other arm, e.g. the arm 38, is configured so that the planes defined by its lateral surfaces are substantially vertical, as shown in the example of Fig. 1. Thus, the arm 38 bends in two opposite lateral directions, for example with respect to the rotation axis Z.

A guide 28 is fitted at the outermost, distal or second end of the first arm 36, allowing the free movement of the arm 36 in both of the opposite lateral directions, for example with respect to the rotation axis Z, but preventing the outermost, distal or second end of the arm 36 from moving in the two opposite directions up and down, for example with respect to the rotation axis Y. Thus, the arm 36 is forced to bend when the movement element 34 bends or buckles in the above presented way. The guide 28 may be configured to limit the rotating movement of the arm 36 and simultaneously of the movement element 34 with respect to the rotation axis Z.

A guide 30 is fitted at the outermost, distal or second end of the first arm 38, allowing the free movement of the arm 38 in two opposite directions up and down, for example with respect to the rotation axis Y, but preventing the outermost, distal or second end of the arm 38 from moving in the two opposite lateral directions, for example with respect to the rotation axis Z. Thus, the arm 38 is forced to bend when the movement element 34 is twisted in the above presented way. The guide 30 may be configured to limit the bending or buckling movement of the arm 38 and simultaneously of the movement element 34 with respect to the rotation axis Y.

In an example, the guide 28, 30 is provided with a slit or slot in which the outermost, distal or second end of the arm 36, 38 is placed, its movement being allowed in the direction of the slit or slot, and prevented in the transverse direction. In an example and Fig. 1, the guide 28, 30 is connected to the bottom element 40. In an example and Fig. 1, the distance of the guide 28, 30 from the movement element 34, and simultaneously its position with respect to the arm 36, 38, are adjustable. Said slits or slots are transverse, for example perpendicular, to each other.

In an example and Fig. 2, the control device 10 may also comprise electronic devices 18, 20, 22, 24 for detecting and indicating a change in the position or a deformation of the arms 36, 38, particularly bending or buckling. Said electronic devices 18, 20, 22, 24 may comprise one or more sensors.

Preferably, said electronic devices 18, 20, 22, 24 generate at least two proportional signals, at least one of which is proportional to the change in the arm 36 and at least one is proportional to the change in the arm 38 and thereby also the change in the position of the cover element 12 with respect to the bottom element 40. The signal is, for example, a voltage signal. For example, the signal is proportional to a deformation in the arm 36, 38, particularly the magnitude of bending or buckling. Said electronic devices 18, 20, 22, 24 also indicate, for example by said signals, the direction in which the arm 36, 38 bends or buckles, so that it is known if the cover element 12 is tilted forward or rearward and if the cover element 12 is rotated to the left or to the right in the lateral direction.

In an example and for generating the above described proportional signals, said electronic devices 18, 20, 22, 24 comprise at least two strain gauge transducers that are connected to each arm 36, 38 and configured to indicate a deformation, particularly bending or buckling, of the arm 36, 38.

In an example, each arm 36, 38 is provided with two said strain gauge transducers placed on opposite sides of the arm 36, 38. In this case, when the proportional signal generated by one strain gauge transducer in each arm 36, 38 changes, for example increases, the proportional signal generated by the other strain gauge transducer changes correspondingly in the opposite direction, for example decreases.

Preferably, when the arms 36, 38 are strip-like, lamellar or made of a sheet, said strain gauge transducers are placed on one side surface or both side surfaces of the arm 36, 38.

In an example, said electronic devices 18, 20, 22, 24 comprise two or more bridge circuits, for example a Wheatstone bridge circuit, one of said strain gauge transducers being connected to each. In an example, the electronic devices 18, 20, 22, 24 may also comprise an amplifier circuit for amplifying the output signal of the bridge circuit. In an example, the electronic devices 18, 20, 22, 24 are further connectable to a supply voltage. In an example, the electronic devices 18, 20, 22, 24 are further connectable to ground potential. For the above presented proportional signals, supply voltage and/or ground potential, the electronic devices 18, 20, 22, 24 may comprise the necessary connectors.

In an example, the electronic devices 18, 20, 22, 24 are configured to receive a supply voltage, for example a direct-current voltage of 5 Volts, and a ground potential, as well as to generate a first increasing voltage signal to indicate acceleration forward, a second increasing voltage signal to indicate acceleration rearward, a third increasing voltage signal to indicate turning to the left, and a fourth increasing voltage signal to indicate turning to the right. Furthermore, when the first voltage signal increases, the second voltage signal decreases, and *vice versa.* Moreover, when the third voltage signal increases, the fourth voltage signal decreases, and *vice versa.*

In an example, said proportional signals act as output signals, on the basis of which the electronic control unit of the electric wheelchair knows to accelerate forward or rearward, brake, and turn the wheelchair to the right and to the left.

According to an example and Fig. 2, the control device 10 may also comprise an electronic control circuit 26 for converting said proportional signals to output signals which are compatible with electronic control units of prior art, or the interfaces, such as buses, used by them. Said control unit may be a part of the assistive device for medical rehabilitation controlled by it. On the basis of the output signals, the control unit of e.g. an electric wheelchair knows to accelerate forward or rearward, brake, or turn the wheelchair to the right and to the left. The electronic control circuit 26 may comprise one or more connectors to which said control unit or bus can be connected.

According to an example of the solution presented, the control device 10 according to the examples described above is integrated in the electric wheelchair, when the aim is to control the electric wheelchair by means of said control device 10 in the way described above. The electric wheelchair comprises one or more batteries, one or more electric motors for driving, and a control unit, to which the control device 10 is connected for controlling in the way described above. The control unit is connected to the battery and the electric motor. The control device 10 is connected to the control device, for example via a bus, for transmitting the above-mentioned proportional signals or output signals.

The invention is not limited merely to the alternatives and examples presented above, or combinations of these. The above presented alternatives and examples should not be regarded as implementations which limit the solutions presented. The implementation of the solution presented will be defined in more detail in the appended claims.

## Claims

1. A control device for controlling an assistive device, the control device (10) comprising:
a bottom element (40) and a cover element (12) which can be tilted and rotated with respect to the bottom element (40);
**characterized in that** the control device further comprises:
a movement element (34) made of an elastic and flexible material, connected between the cover element and the bottom element, and configured to rotate when the cover element is rotated in two opposite lateral direction, and to bend or buckle when the cover element is tilted forward and rearward;
a first and a second arm (36, 38) having an elastic structure and extending to a distance from the movement element (34), pointing in opposite directions with respect to each other, and configured to follow said movements of the movement element (34);
a first guide (28) in which the first arm (36) is fitted and which allows its movement in said lateral directions and prevents its movements so that the first arm (36) has to bend when the movement element (34) is tilted forward and rearward;
a second guide (30), in which the second arm (38) is fitted and which allows its tilting forward and rearward and prevents its movements so that the second arm (38) has to bend when the movement element (34) is rotated in said two opposite lateral directions; and
electronic devices (18, 20, 22, 24) for detecting and indicating a change in the position or a deformation of the first and second arm (36, 38), the electronic devices (18, 20, 22, 24) being configured to generate at least one signal proportional to the tilting of the cover element (12) forward and rearward, and at least one signal proportional to the rotation of the cover element (12) in two opposite lateral directions.

2. The control device according to claim 1, wherein the first and second arms (36, 38) are strip-like, lamellar, or made of a sheet.

3. The control device according to claim 1 or 2, wherein said electronic devices (18, 20, 22, 24) comprise at least one strain gauge transducer placed in each of the first and second arms (36, 38).

4. The control device according to claim 2, wherein said electronic devices (18, 20, 22, 24) comprise two strain gauge transducers placed in each of the first and second arms (36, 38), on both of the side surfaces in each arm (36, 38).

5. The control device according to any of the claims 1 to 4, wherein the movement element (34) is at least partly made of rubber.

6. The control device according to any of the claims 1 to 5, wherein the first and second arms (36, 38) are at least partly made of steel.

7. The control device according to any of the claims 1 to 6, wherein said electronic devices (18, 20, 22, 24) are fitted in the bottom element (40), and the cover element (12) is arranged to cover the bottom element.

8. The control device according to any of the claims 1 to 7, wherein the first guide (28) comprises a slit or a slot, in which the first arm (36, 38) is movable, and the second guide (30) comprises a slit or a slot in which the second arm (38) is movable, the slits or slots being transverse to each other.

9. The control device according to any of the claims 1 to 8, wherein the distance of the first and the second guide (28, 30) to the movement element (34) is adjustable.

10. The control device according to any of the claims 1 to 9, wherein each arm (36, 38) is fastened to the movement element (34) either directly or by such a fastening element that follows said movements of the movement element (34).

11. The control element according to any of the claims 1 to 10, further comprising an electronic control circuit (26) for converting said signals to output signals configured to control the assistive device.

12. The control device according to any of the claims 1 to 11, wherein the above mentioned signals are proportional.

13. An electric wheelchair, **characterized in that** said electric wheelchair comprises a control device (10) according to any of the claims 1 to 12, configured to steer the electric wheelchair forward and rearward, and to turn the electric wheelchair to the left and to the right.

14. The electric wheelchair according to claim 13, wherein the control device (10) is placed so that the cover element (12) of the control device (10) is movable by foot.

15. The electric wheelchair according to claim 13 or 14, comprising a control unit and wherein the control device (10) is connected to said control unit.

## Patentansprüche

1. Eine Steuerungsvorrichtung zum Steuern einer Hilfsvorrichtung, wobei die Steuerungsvorrichtung (10) Folgendes aufweist:
ein Bodenelement (40) und ein Abdeckelement (12), das in Bezug auf das Bodenelement (40) gekippt und gedreht werden kann;
**dadurch gekennzeichnet, dass** die Steuerungsvorrichtung ferner Folgendes aufweist:
ein Bewegungselement (34), das aus einem elastischen und flexiblen Material hergestellt ist, das zwischen dem Abdeckelement und dem Bodenelement angebracht und konfiguriert ist, um sich zu drehen, wenn das Abdeckelement in zwei entgegengesetzte seitliche Richtungen gedreht wird, und um sich zu biegen oder zu wölben, wenn das Abdeckelement nach vorne und hinten geneigt wird;
einen ersten und einen zweiten Arm (36, 38) die eine elastische Struktur haben und sich bis zu einem Abstand von dem Bewegungselement (34) erstrecken, wobei sie in entgegengesetzte Richtungen zueinander zeigen und konfiguriert sind, um den Bewegungen des Bewegungselements (34) zu folgen;
eine erste Führung (28), in die der erste Arm (36) eingepasst ist und die seine Bewegung in den seitlichen Richtungen zulässt und seine Bewegungen verhindert, so dass sich der erste Arm (36) verbiegen muss, wenn das Bewegungselement (34) nach vorne und hinten geneigt wird;
eine zweite Führung (30), in die der zweite Arm (38) eingepasst ist und die seine Neigung nach vorne und hinten zulässt und seine Bewegungen verhindert, so dass sich der zweite Arm (38) verbiegen muss, wenn das Bewegungselement (34) in die beiden entgegengesetzten seitlichen Richtungen gedreht wird; und
elektronische Vorrichtungen (18, 20, 22, 24) zum Erfassen und Anzeigen einer Positionsänderung oder einer Verformung des ersten und zweiten Arms (36, 38), wobei die elektronischen Vorrichtungen (18, 20, 22, 24) konfiguriert sind, um mindestens ein Signal zu erzeugen, das proportional zur Neigung des Abdeckelements (12) nach vorne und hinten ist, und mindestens ein Signal, das proportional zur Drehung des Abdeckelements (12) in zwei entgegengesetzten seitlichen Richtungen ist.

2. Steuerungsvorrichtung gemäß Anspruch 1, wobei der erste und der zweite Arm (36, 38) streifenförmig, lamellenförmig oder aus einer Platte gefertigt sind.

3. Steuerungsvorrichtung gemäß Anspruch 1 oder 2, wobei die elektronischen Vorrichtungen (18, 20, 22, 24) mindestens einen Dehnmessstreifen-Wandler aufweisen, der in jedem der ersten und zweiten Arme (36, 38) angeordnet ist.

4. Steuerungsvorrichtung gemäß Anspruch 2, wobei die elektronischen Vorrichtungen (18, 20, 22, 24) zwei Dehnmessstreifen-Wandler aufweisen, die in jedem der ersten und zweiten Arme (36, 38) an beiden Seitenflächen in jedem Arm (36, 38) angeordnet sind.

5. Steuerungsvorrichtung gemäß einem der Ansprüche 1 bis 4, wobei das Bewegungselement (34) zumindest teilweise aus Gummi ist.

6. Steuerungsvorrichtung gemäß einem der Ansprüche 1 bis 5, wobei der erste und zweite Arm (36, 38) zumindest teilweise aus Stahl ist.

7. Steuerungsvorrichtung gemäß einem der Ansprüche 1 bis 6, wobei die elektronischen Vorrichtungen (18, 20, 22, 24) in das Bodenelement (40) eingepasst sind und das Abdeckelement (12) angeordnet ist, um das Bodenelement abzudecken.

8. Steuerungsvorrichtung gemäß einem der Ansprüche 1 bis 7, wobei die erste Führung (28) einen Spalt oder Schlitz aufweist, in dem der erste Arm (36, 38) beweglich ist, und die zweite Führung (30) einen Spalt oder Schlitz aufweist, in dem der zweite Arm (38) beweglich ist, wobei die Spalte oder Schlitze quer zueinander liegen.

9. Steuerungsvorrichtung gemäß einem der Ansprüche 1 bis 8, wobei der Abstand der ersten und zweiten Führung (28, 30) zum Bewegungselement (34) einstellbar ist.

10. Steuerungsvorrichtung gemäß einem der Ansprüche 1 bis 9, wobei jeder Arm (36, 38) am Bewegungselement (34) entweder direkt oder durch ein solches Befestigungselement, das den Bewegungen des Bewegungselements (34) folgt, befestigt ist.

11. Steuerungsvorrichtung gemäß einem der Ansprüche 1 bis 10, das darüber hinaus eine elektronische Steuerschaltung (26) zum Umwandeln der Signale in Ausgangssignale, die zum Steuern der Hilfsvorrichtung konfiguriert sind, aufweist.

12. Steuerungsvorrichtung gemäß einem der Ansprüche 1 bis 11, wobei die oben genannten Signale proportional sind.

13. Ein Elektrorollstuhl, **dadurch gekennzeichnet, dass** der Elektrorollstuhl eine Steuerungsvorrichtung (10) gemäß einem der Ansprüche 1 bis 12 aufweist, die konfiguriert ist, um den Elektrorollstuhl nach vorne und hinten zu steuern und den Elektrorollstuhl nach links und rechts zu drehen.

14. Elektrorollstuhl gemäß Anspruch 13, wobei die Steuerungsvorrichtung (10) so angeordnet ist, dass das Abdeckelement (12) der Steuerungsvorrichtung (10) per Fuß bewegt werden kann.

15. Elektrorollstuhl gemäß Anspruch 13 oder 14, welcher eine Steuereinheit aufweist und wobei die Steuerungsvorrichtung (10) mit der Steuereinheit verbunden ist.

## Revendications

1. Dispositif de commande permettant de commander un dispositif d'assistance, le dispositif de commande (10) comprenant :
un élément inférieur (40) et un élément de couverture (12) qui peut être incliné et tourné relativement à l'élément inférieur (40) ;
**caractérisé en ce que** le dispositif de commande comprend en outre :
un élément de mouvement (34) constitué d'un matériau élastique et flexible, raccordé entre l'élément de couverture et l'élément inférieur, et configuré afin de tourner lorsque l'élément de couverture est tourné dans deux directions latérales opposées, et afin de se plier ou de se déformer lorsque l'élément de couverture est incliné en avant et en arrière ;
un premier et un second bras (36, 38) présentant une structure élastique et s'étendant sur une distance depuis l'élément de mouvement (34), pointant dans des directions opposées l'une par rapport à l'autre, et configuré afin de suivre lesdits mouvements de l'élément de mouvement (34) ;
un premier guide (28), dans lequel le premier bras (36) est installé et qui permet son mouvement dans lesdites directions latérales et empêche ses mouvements de sorte que le premier bras (36) doit se plier lorsque l'élément de mouvement (34) est incliné en avant et en arrière ;
un second guide (30), dans lequel le second bras (38) est installé et qui permet son inclinaison vers l'avant et vers l'arrière et empêche ses mouvements de sorte que le second bras (38) doit se plier lorsque l'élément de mouvement (34) est mis en rotation dans lesdites deux directions latérales opposées ; et
des dispositifs électroniques (18, 20, 22, 24) permettant de détecter et d'indiquer un changement de position ou une déformation du premier et du second bras (36, 38), les dispositifs électroniques (18, 20, 22, 24) étant configurés afin de générer au moins un signal proportionnel à l'inclinaison de l'élément de couverture (12) en avant et en arrière, et au moins un signal proportionnel à la rotation de l'élément de couverture (12) dans deux directions latérales opposées.

2. Dispositif de commande selon la revendication 1, dans lequel le premier et le second bras (36, 38) sont en forme de bande, lamellaires ou réalisés en une feuille.

3. Dispositif de commande selon la revendication 1 ou 2, dans lequel lesdits dispositifs électroniques (18, 20, 22, 24) comprennent au moins un transducteur de jauge de contrainte placé dans chacun du premier et du second bras (36, 38).

4. Dispositif de commande selon la revendication 2, dans lequel lesdits dispositifs électroniques (18, 20, 22, 24) comprennent deux transducteurs de jauge de contrainte placés dans chacun du premier et du second bras (36, 38) sur les deux surfaces latérales dans chaque bras (36, 38).

5. Dispositif de commande selon l'une quelconque des revendications 1 à 4, dans lequel l'élément de mouvement (34) est au moins partiellement réalisé en caoutchouc.

6. Dispositif de commande selon l'une quelconque des revendications 1 à 5, dans lequel le premier et le second bras (36, 38) sont au moins partiellement réalisés en acier.

7. Dispositif de commande selon l'une quelconque des revendications 1 à 6, dans lequel lesdits dispositifs électroniques (18, 20, 22, 24) sont installés dans l'élément inférieur (40), et l'élément de couverture (12) est agencé de manière à couvrir l'élément inférieur.

8. Dispositif de commande selon l'une quelconque des revendications 1 à 7, dans lequel le premier guide (28) comprend une fente ou incision dans laquelle le premier bras (36, 38) est mobile, et le second guide (30) comprend une fente ou incision dans laquelle le second bras (38) est mobile, les fentes ou incisions étant transversales l'une par rapport à l'autre.

9. Dispositif de commande selon l'une quelconque des revendications 1 à 8, dans lequel la distance entre le premier et le second guides (28, 30) et l'élément de mouvement (34) est ajustable.

10. Dispositif de commande selon l'une quelconque des revendications 1 à 9, dans lequel chaque bras (36, 38) est fixé à l'élément de mouvement (34) soit directement, soit par le biais d'un élément de fixation qui suit lesdits mouvements de l'élément de mouvement (34).

11. Dispositif de commande selon l'une quelconque des revendications 1 à 10, comprenant en outre un circuit de commande électronique (26) permettant de convertir lesdits signaux en signaux de sortie configurés afin de commander le dispositif d'assistance.

12. Dispositif de commande selon l'une quelconque des revendications 1 à 11, dans lequel les signaux mentionnés ci-dessus sont proportionnels.

13. Fauteuil roulant électrique, **caractérisé en ce que** ledit fauteuil roulant électrique comprend un dispositif de commande (10) selon l'une quelconque des revendications 1 à 12, configuré afin de diriger un fauteuil roulant électrique en avant et en arrière, et afin de tourner le fauteuil roulant électrique à gauche et à droite.

14. Fauteuil roulant électrique selon la revendication 13, dans lequel le dispositif de commande (10) est placé de sorte que l'élément de couverture (12) du dispositif de commande (10) est déplaçable avec le pied.

15. Fauteuil roulant électrique selon la revendication 13 ou 14, comprenant une unité de commande et dans lequel le dispositif de commande (10) est raccordé à ladite unité de commande.
